(19) Europäisches Patentamt
European Patent Office
Office européen des brevets

(11) **EP 2 683 964 B1**

(12) **EUROPÄISCHE PATENTSCHRIFT**

(45) Veröffentlichungstag und Bekanntmachung des Hinweises auf die Patenterteilung:
**08.06.2016 Patentblatt 2016/23**

(51) Int Cl.:
*F16G 13/12* *(2006.01)* *B21L 3/00* *(2006.01)*

(21) Anmeldenummer: **11709007.6**

(22) Anmeldetag: **07.03.2011**

(86) Internationale Anmeldenummer:
**PCT/EP2011/001114**

(87) Internationale Veröffentlichungsnummer:
**WO 2012/119613 (13.09.2012 Gazette 2012/37)**

(54) **AUS OVALEN PROFILKETTENGLIEDERN BESTEHENDE KETTE UND VERFAHREN ZUR HERSTELLUNG EINER SOLCHEN**

CHAIN CONSISTING OF OVAL PROFILE CHAIN LINKS, AND METHOD FOR PRODUCING A CHAIN OF THIS TYPE

CHAÎNE CONSTITUÉE DE MAILLONS DE CHAÎNE PROFILÉS OVALES ET PROCÉDÉ DE FABRICATION D'UNE TELLE CHAÎNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**15.01.2014 Patentblatt 2014/03**

(73) Patentinhaber: **Pewag Austria GmbH**
**8605 Kapfenberg (AT)**

(72) Erfinder:
• **PENGG, Ägyd**
**A-9020 Klagenfurt (AT)**

• **FUCHS, Franz**
**A-8605 Kapfenberg (AT)**

(74) Vertreter: **Patentanwälte Geyer, Fehners & Partner mbB**
**Perhamerstrasse 31**
**80687 München (DE)**

(56) Entgegenhaltungen:
WO-A1-2009/080289   DE-A1- 3 514 103
DE-A1- 19 806 719   DE-U1-202005 010 844
US-A- 5 956 936

**Beschreibung**

Die Erfindung bezieht sich auf eine aus ovalen Profilkettengliedern bestehende Kette, bei der jeder die beiden Längsschenkel eines Kettengliedes an einer Endseite desselben miteinander verbindende Endsteg mit einer auf seiner Innenseite ausgebildeten Abstützfläche sich auf einer an der Innenseite des zugeordneten Endsteges des eingehängten benachbarten Profilkettengliedes angebrachten Anlagefläche abstützt. Die Erfindung bezieht sich ferner auf ein Verfahren zur Herstellung von solchen Ketten, bei dem geschlossene Profilkettenglieder in offene Profilkettenglieder eingehängt und anschließend letztere durch Verschweißen geschlossen werden, wobei sich im fertigen Zustand der Kette jeder die beiden Längsschenkel jedes Kettengliedes an einer Endseite desselben miteinander verbindende Endsteg mit einer auf seiner Innenseite ausgebildeten Abstützfläche auf einer an der Innenseite des zugeordneten Endsteges des eingehängten benachbarten Profilkettengliedes angebrachten Anlagefläche abstützt.

Es sind aus ovalen Profilkettengliedern bestehende Ketten der eingangs genannten Art bekannt, bei denen die Querschnitte der eingesetzten Profilstähle, insbesondere an den die Längsschenkel der Kettenglieder an deren Enden verbindenden Endstegen, einen kreisförmigen Querschnitt aufweisen (US 2006/0053766 A1, DE 2007 061 512 A1).

Bei anderen bekannten Ketten (DE 10 2008 034 360 A1) haben die Querschnitte der Endstege zwar keinen kreisrunden Querschnitt, sind aber an ihrem der Innenöffnung des betreffenden Kettengliedes zugewandten Seiten kreisförmig gerundet ausgebildet.

Andere bekannte Kette sind in US5956936 und DE 19806719, DE 202005010844U, WO 2009080289 offenbart.

In beiden Fällen führt dies aber bei einer fertigen Kette unter Zug dazu, daß die Endstege jeweils zweier ineinander greifender Kettenglieder an ihren Innenseiten mit ihren dort vorgesehenen Anlage- bzw. Abstützflächen miteinander in Kontakteingriff treten, wobei sich die Innenseiten der Endstege der einen Kettenglieder gegen die Innenseite der Endstege der anderen, um 90° zu ihnen um ihre Längsachse verschwenkt angeordneten Kettenglieder anlegen. Dabei werden an solchen aneinander anliegenden Endstegen jeweils zweier ineinander gehängter Kettenglieder Gelenkstellen ausgebildet, die dann wirksam werden, wenn die betreffende Rundstahlkette unter Last eine Richtungsänderung durchführt, etwa beim Umlaufen einer Umlenkrolle oder bei anderen unter Last erfolgenden Richtungsänderungen. Dies führt zum Auftreten von Verschleiß an solchen Gelenkstellen von Rundstahlketten unter Last, was schließlich die Notwendigkeit des Austausches zumindest von an den Endstegen der Gelenkstellen verschlissenen Kettengliedern, wenn nicht gar zum Austausch der gesamten Kette, führen kann.

Zum Herstellen solcher Ketten ist es bekannt (DE 10 2007 061 512 A1), für die einzelnen Kettenglieder entsprechende Profil- bzw. Rundstahlabschnitte in eine der gewünschten Kettengliedform entsprechende Form (oval, rund) zu überführen, sie ineinander anzuhängen und dann die Stirnflächen der vorgebogenen Profilstahlabschnitte durch Schweißung miteinander zu verbinden. Da hierbei jedes einzelne Kettenglied in eine offene Form vorgebogen und dann später durch Verschweißen geschlossen werden muß, ist die Herstellung solcher Ketten aufwendig.

Aus der DE 32 12 360 C1 ist nun ein Verfahren der einleitend genannten Art zum Herstellen von Kettengliedern bekannt, bei dem geschlossene Kettenglieder in offene Kettenglieder eingehängt und anschließend die offenen Kettenglieder durch Widerstandsstumpfschweißen verschlossen werden. Als offene Kettenglieder werden dabei solche verwendet, die aus einem U-förmigen Unterteil und einem stabförmigen Oberteil bestehen, wobei die miteinander zu verschweißenden Enden der Unter- und Oberteile der offenen Kettenglieder vor dem Verschweißen mit im wesentlichen dachförmigen Verjüngungen versehen werden, deren Scheitel sich in der Schweißstellung kreuzen. Durch diese Ausgestaltung wird der Stromübergang zwischen dem Ober- und dem Unterteil verbessert und eine intensive Erwärmung im Bereich der Schweißstellen erreicht, wobei geringe ungewollte Verschiebungen beim Zusammenfügen die Festigkeit der Schweißstelle nicht beeinträchtigen. Bei diesem Verfahren wird nur jedes zweite Kettenglied geschweißt, wodurch sich die Produktionsleistung der eingesetzten Schweißmaschine im Vergleich zu den bekannten Verfahren, bei denen jedes Kettenglied geschweißt werden muß, verdoppelt. Allerdings bedingt die besondere Ausgestaltung der Stirnflächen des U-förmigen Unterteils sowie der Unterseite des stabförmigen Oberteils einen zusätzlichen Aufwand.

Die dort empfohlene Verwendung von Rundmaterial an den Endstegen dieser bekannten Kettenglieder bringt überdies auch keine Verbesserungen hinsichtlich der Lebensdauer dieser Kettenglieder aufgrund von Gelenkverschleiß.

Ausgehend hiervon stellt die Erfindung darauf ab, eine Kette der eingangs genannten Art so zu verbessern, daß in den Gelenken das verfügbare Verschleißvolumen vergrößert und damit die Lebensdauer der einzelnen Kettenglieder erhöht wird.

Außerdem liegt der Erfindung auch die Aufgabe zugrunde, ein Herstellverfahren für eine solche Kette vorzuschlagen, das einfach ausführbar und bei dem der Herstellungsaufwand besonders gering ist.

Erfindungsgemäß wird zur Lösung dieser jeweiligen Aufgabe bei einer Kette der eingangs genannten Art vorgesehen, daß die Abstützflächen und die Anlageflächen aller Endstege jeweils seitlich über die beiden seitlichen Begrenzungsflächen des betreffenden Endsteges hinaus verbreitert und einander zugeordnete Abstütz- und Anlageflächen jeweils als über die gesamte Breite dieser verbreiterten Flächen hinweg zueinander komplementäre Zylinderflächen ausgebildet sind.

Bei der erfindungsgemäßen Profilkette wird durch die spezielle Ausgestaltung der Endstege, nämlich deren Abstützflächen bzw. deren Anlageflächen, die über die beiden seitlichen Begrenzungsflächen des betreffenden Endsteges hinaus seitlich verbreitert und dabei jeweils als über die gesamte Breite dieser verbreiterten Flächen hinweg zueinander komplementäre Zylinderflächen ausgebildet sind, erreicht, daß diese bei Last aufeinander liegenden, jeweils eine Gelenkstelle zwischen zwei aufeinander folgende Kettenglieder ausbildenden Abstütz- und Anlageflächen deutlich größere Flächen als bei reinen Rundgliedern sind und dabei ein wesentlich größeres Verschleißvolumen im Gelenk als bei einer Rundstahlkette (mit gleicher Brechkraft) zur Verfügung stellen. Infolge der vergrößerten Fläche wird aber auch die bei einer Last wirksame Flächenpressung durch diese erfindungsgemäße Gestaltoptimierung des Gelenkes herabgesetzt, was wiederum zu einem günstigeren Verschleißverhalten als bei reinen Rundstahlketten führt. Dadurch, daß an einer solchen Gelenkstelle zwischen den zwei ineinander eingehängten Profilkettengliedern die Abstützfläche am Endsteg des einen und die Anlagefläche am Endsteg des anderen Kettengliedes nicht nur seitlich verbreitert ist, sondern jeweils als im wesentlichen über die gesamte Breite dieser verbreiterten Fläche hinweg zueinander komplementäre Zylinderflächen ausgebildet sind, somit die Abstützfläche von einem Kettenglied nur in parallel zur Aufspannfläche desselben liegenden Ebenen eine (nämlich kreisförmige) Krümmung aufweist, während die Anlagefläche am anderen Kettenglied nur in senkrecht auf dessen Aufspannfläche stehenden Ebenen mit einer komplementären kreisabschnittförmigen Krümmung versehen ist, also zwei ineinander laufende Zylinderflächen die Gelenkstelle bilden, werden in Lastrichtung der Kette wirkende Kräfte zwischen den aufeinander laufenden Abstützflächen und Anlageflächen jeweils in radialer Richtung zwischen den Kettengliedern übertragen, was eine günstige Einleitung bzw. Ableitung in den bzw. aus dem jeweiligen Endsteg bedeutet. Infolge der Zylinderform der aufeinander laufenden Gelenk-Lagerstellen tritt in den Lagerflächen auch eine sehr gleichmäßige Belastung auf, da über die Breite der Lagerfläche gesehen jeweils gleich große örtliche Relativgeschwindigkeiten zwischen beiden Lagerflächen auftreten, also über die Lagerflächen hinweg auch eine sehr gleichmäßige lokale Geschwindigkeit vorliegt, was ebenfalls zu einem sehr gleichmäßigen, günstigen Verschleißverhalten führt.

Die Kettenglieder können dabei bevorzugt durch Schmieden oder auch Gießen oder auch durch Sintern hergestellt sein, wobei die spezielle Form der Kettenglieder durch diese Herstellungsmethoden sehr vorteilhaft der Zweckbestimmung der Kette (zum Heben, Fördern oder Anschlagen) frei angepaßt werden kann.

Sind bei einer erfindungsgemäßen Kette die einzelnen Kettenglieder als Vertikalglieder und als Horizontalglieder eingesetzt, wird bevorzugt bei den als Vertikalgliedern dienenden Profilkettengliedern die Verbreiterung deren Abstützfläche im wesentlichen entlang des gesamten gekrümmten Verlaufes des jeweiligen Endsteges vorgesehen.

Gleichfalls vorteilhafterweise werden bei den als Horizontalgliedern dienenden Profilkettengliedern deren Anlageflächen so ausgebildet, daß sie den jeweiligen Endsteg an seiner Innenseite und seinen beiden seitlichen Begrenzungsflächen bis hinauf zu einer das betreffende Kettenglied an seiner Außenseite begrenzenden Umfangsfläche umlaufen.

Besonders bestehen bei einer erfindungsgemäßen Kette die Vertikalglieder aus miteinander durch Schweißen, insbesondere durch Reibschweißen, verbundenen Profilketten-Halbgliedern.

Die erfindungsgemäßen Ketten weisen an den Gelenkstellen zwischen zwei ineinander eingehängten Kettengliedern eine vorteilhafte Ausbildung der aufeinander laufenden Lagerflächen zwischen den beiden dort bei Belastung der Ketten aufeinander laufenden Endstegen auf, durch die ein besonders günstiges Verschleißverhalten, eine geringere spezifische Belastung als bei Profilgliedern mit Rundprofil und damit auch eine deutlich größere Lebensdauer für die Gelenkstellen erreicht wird.

Das erfindungsgemäße Verfahren sieht bei einem Verfahren zur Herstellung von Kettengliedern der eingangs genannten Art vor, als offene Kettenglieder Profilketten-Halbglieder einzusetzen, die als im Bereich der Mitte der Längsschenkel eines Kettengliedes senkrecht zur Aufspannebene desselben abgetrennte Halbglieder ausgeführt sind, wobei die Abstützflächen und die Anlageflächen aller Endstege jeweils seitlich über die Seitenflanken des betreffenden Endsteges hinaus verbreitert und einander zugeordnete Abstütz- und Anlageflächen jeweils als über die gesamte Breite dieser verbreiterten Flächen hinweg zueinander komplementäre Zylinderflächen ausgebildet sind.

Auch bei dem erfindungsgemäßen Herstellverfahren wird nur jedes zweite Kettenglied durch Schweißen verschlossen, wodurch sich die Produktionsleistung der entsprechenden Schweißmaschine im Vergleich zu dem Herstellungsverfahren, bei denen jedes Kettenglied durch Schweißen verschlossen werden muß, verdoppelt.

Dabei müssen für die offenen Kettenglieder jedoch nicht unterschiedliche Einzel-Teilglieder eingesetzt und miteinander verschweißt werden, wie dies bei dem eingangs geschilderten Herstellverfahren der Fall ist. Vielmehr wird bei dem erfindungsgemäßen Herstellungsverfahren der große Vorteil erreicht, daß für die Ausbildung der offenen Kettenglieder nur eine Form von Teilgliedern in Form von Halbgliedern verwendet werden muß, was nicht nur die Herstellung, sondern auch die Lagerhaltung begünstigt, da nicht unterschiedlich geformte Teilglieder vorgehalten und einsetzt werden müssen. Dabei liegen die miteinander zu verschweißenden Stirnflächen jeweils zweier einander zugewandter Halbglieder auch innerhalb einer Kettenglied-Symmetrieebene, was die Durchführung des Schweißvorganges begünstigt.

Zur Verbindung der Halbglieder ist jedes geeignete Schweißverfahren einsetzbar.

Als ganz besonders vorteilhaft sowie rasch und günstig ausführbar hat sich jedoch für die Verbindung jeweils zweier Profilketten-Halbglieder zur Schaffung eines geschlossenen Profilkettengliedes das Reibschweißen erwiesen, wobei hier, wiederum ganz besonders bevorzugt, Linearreibschweißen eingesetzt wird.

Wird mittels Reibschweißen gearbeitet, dann läßt sich der große Vorteil erreichen, daß für die Profilkettenglieder auch solche aus Kunststoff ohne weiteres eingesetzt werden können.

Die Erfindung wird nachfolgend anhand der Zeichnungen im Prinzip beispielshalber noch näher erläutert. Es zeigen:

Fig. 1 die Perspektivansicht eines aus vier aufeinanderfolgenden Kettengliedern bestehenden Abschnitts einer erfindungsgemäßen Profilkette;

Fig. 2 eine (vergrößerte) Perspektivansicht eines Kettengliedes (Horizontalgliedes) einer erfindungsgemäßen Kette;

Fig. 3 eine Draufsicht auf das Profilkettenglied gemäß Fig. 2;

Fig. 4 eine Schnittdarstellung gemäß Schnittlage **E-E** in Fig. 3;

Fig. 5 eine Schnittansicht gemäß Schnittlage **D-D** aus Fig. 3;

Fig. 6 eine vergrößerte Perspektivansicht eines Kettengliedes (Vertikalgliedes) einer erfindungsgemäßen Kette;

Fig. 7 eine Draufsicht auf ein durch den Mittelbereich der Seitenschenkel des Kettengliedes gemäß Fig. 6 geschnittenes Profilketten-Halbglied;

Fig. 8 einen Schnitt entlang Schnittebene **F-F** in Fig. 7, und

Fig. 9 eine Schnittdarstellung gemäß Schnittlebene **G-G** in Fig. 7.

In der folgenden Figurenbeschreibung sind in den verschiedenen Figuren Teile gleicher Funktion auch mit stets gleichen Bezugszeichen versehen.

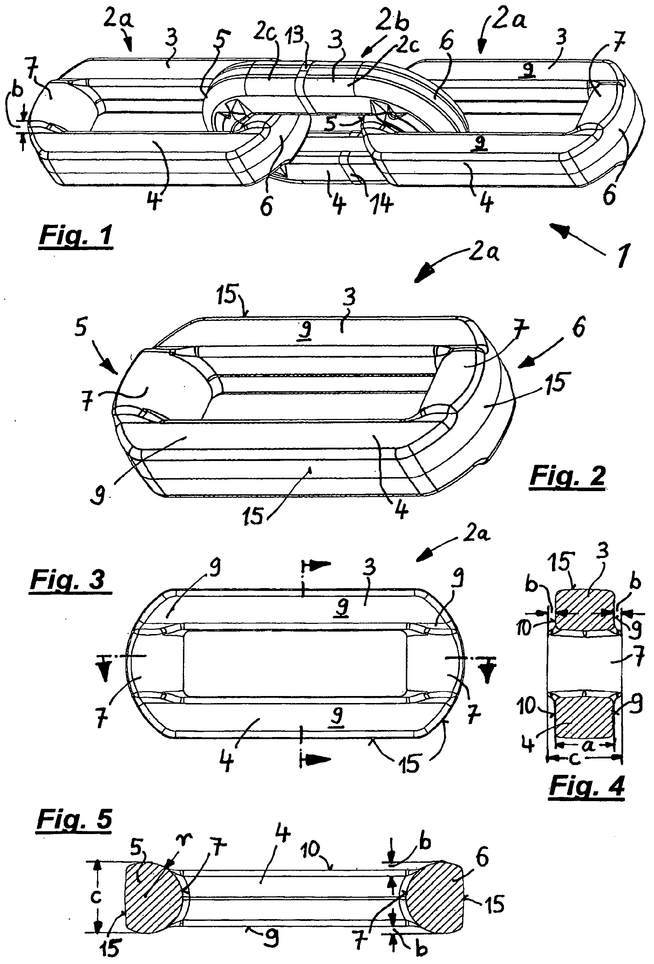

Zunächst ist in Fig. 1 ein Ausschnitt aus einer Kette 1 in perspektivischer Darstellung gezeigt, der, in abwechselnder Reihenfolge, zwei Horizontal-Profilkettenglieder 2a sowie zwei Vertikal-Profilkettenglieder 2b umfaßt, wobei jeweils ein Vertikalglied 2b zwei Horizontalglieder 2a, in die es jeweils eingehakt ist, verbindet.

Bei den Horizontalgliedern 2a und den Vertikalgliedern 2b handelt es sich um längliche, ovale Profilkettenglieder aus im Querschnitt nicht-kreisförmigem Material, worauf weiter unten noch im einzelnen eingegangen wird.

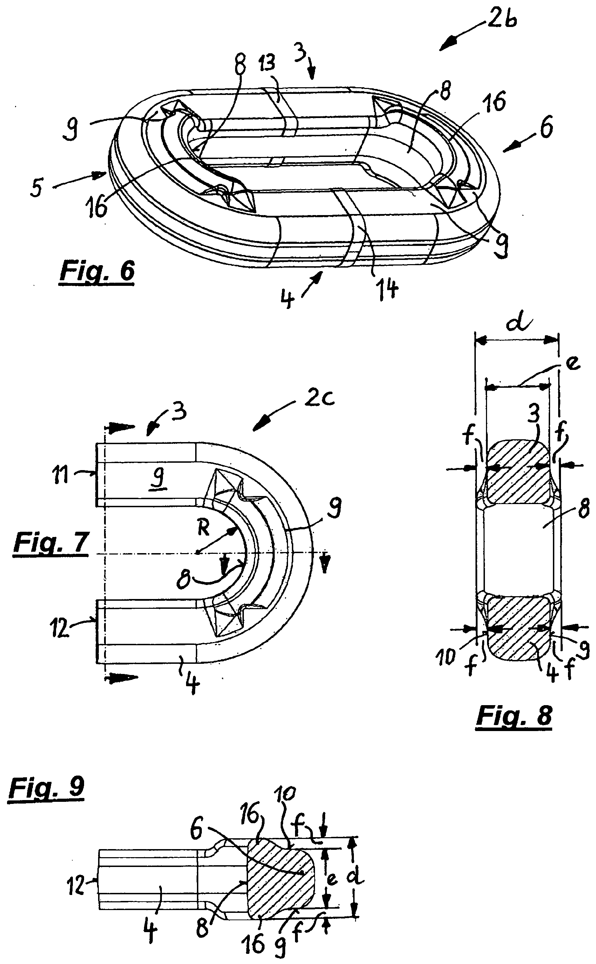

Wie Fig. 1 ebenfalls zeigt, sind die Horizontalglieder 2a als einteilige, geschlossene Kettenglieder ausgeführt, während die Vertikalglieder 2b jeweils aus zwei Profilketten-Halbgliedern 2c bestehen, die zur Ausbildung eines geschlossenen Vertikalgliedes 2b an ihren einander zugewandten Stirnflächen 11, 12 (vgl. Fig. 7) miteinander längs Schweißstellen 13, 14 verschweißt sind.

Dabei sind die Halbglieder 2c so ausgebildet, daß jedes derselben ein hälftiges Vertikalglied 2b darstellt, so daß nach Verschweißung der zwei Halbglieder 2c zu einem geschlossenen Vertikalglied 2b die Schweißstellen 13, 14 an den dann entstandenen Seitenschenkeln 3 und 4 jeweils mittig und zueinander ausgerichtet in einer Mittelebene entsprechend Fig. 6 angeordnet sind.

Die Herstellung der Kette 1 erfolgt dabei so, daß in ein geschlossenes Kettenglied (Horizontalglied 2a) an dessen beiden Endstegen 5, 6 (vgl. Fig. 2) jeweils ein Profilketten-Halbglied 2c durch die Mittelöffnung des betreffenden geschlossenen Horizontalgliedes 2a hindurch eingehängt wird und zwar derart, daß die freien Schenkel der beiden eingehängten Profilketten-Halbglieder 2c in zueinander entgegengesetzte Richtungen verlaufen.

Sodann werden, wie aus Fig. 1 entnehmbar ist, die an zwei aufeinander folgenden Horizontalgliedern 2a eingehängten Profilketten-Halbglieder 2c mit ihren einander zugewandten Stirnflächen 11 und 12 am Ende ihrer Schenkel 3 und 4 miteinander in geeigneter Weise verschweißt, so daß ein die beiden Horizontalglieder 2a verbindendes geschlossenes Vertikalglied 2b entsteht.

Zum Verschweißen der beiden Profilketten-Halbglieder 2c miteinander kann jedes geeignete Schweißverfahren angewendet werden.

Es hat sich jedoch als ganz besonders vorteilhaft erwiesen, wenn die Verschweißung an den Schweißstellen 13 und 14 mittels eines Reibschweißverfahrens, und hier ganz besonders bevorzugt mittels eines Linearreibschweißverfahrens, vorgenommen wird. Da die Schweißstellen 13 und 14 an den Schenkeln 3 und 4 des jeweiligen Horizontalgliedes 2b mittig angeordnet, zueinander ausgerichtet und in einer Mittelebene als Teilungsebene angebracht sind, kann ein gleichzeitiges Linearreibschweißen der beiden Schweißstellen 13 und 14 in einem Vorgang rasch und günstig ausgeführt werden.

Dies ist sogar möglich, wenn die Profilketten-Halbglieder 2c nicht aus einem Metall, sondern z. B. aus einem Kunststoff bestehen, da das Reibschweißen bzw. Linearreibeschweißen auch an Kunststoffteilen ohne Schwierigkeit erfolgen kann.

In Fig. 2 ist eine (vergrößerte) Perspektivdarstellung eines Horizontalgliedes 2a und in Fig. 6 eine solche eines Vertikalgliedes 2b gezeigt.

Zu der perspektivischen Darstellung des Horizontalgliedes 2a nach Fig. 2 zeigt Fig. 3 eine Draufsicht, Fig. 4 eine Schnittansicht längs Schnittebene E-E in Fig. 3 und Fig. 5 eine Schnittansicht längs Schnittebene D-D ebenfalls in Fig. 3.

Die Seitenschenkel 3 und 4 werden beidseits von seitlichen Begrenzungsflächen 9 (Fig. 2) auf der einen und 10 (Fig. 4 und 5) auf der anderen Seite begrenzt.

Auch die Endstege 5 und 6 weisen diese seitlichen Begrenzungsflächen 9 bzw. 10 auf, und zwar in dem Bereich, in dem die Seitenstege 3 und 4 in den jeweiligen Endsteg 5 bzw. 6 übergehen, wie dies der Darstellung aus Fig. 5 gut entnehmbar ist.

Dabei liegen auf jeder Seite des Horizontalgliedes 2a diese seitlichen Begrenzungsflächen 9 bzw. 10 jeweils innerhalb einer Ebene.

Auf der der Innenöffnung des Kettengliedes 2a zugewandten Seite ist an den Endschenkeln 5 und 6 jeweils eine Anlagefläche 7 ausgebildet, die, wie der Darstellung aus Fig. 5 entnehmbar ist, einen kreisabschnittförmigen Querschnitt aufweist und den jeweiligen Endsteg 5 bzw. 6 auf dessen Innenseite sowie auf dessen beiden Außenseiten jeweils bis zur Einmündung in eine außen um das gesamte Kettenglied 2a herum verlaufende Umfangsfläche 15 umläuft.

Wie insbesondere gut aus Fig. 5 entnommen werden kann, hat dabei die zylindrische Anlagefläche 7 an beiden Endstegen 5, 6 einen Verlauf, der beide seitlichen Begrenzungsflächen 9 und 10 der Endstege 5 und 6 (und auch der Längsschenkel 3 und 4) seitlich um eine Größe b überragt. Dadurch entsteht eine Anlagefläche 7 an jedem der Seitenschenkel 5 und 6, an der sich die entsprechende Abstützfläche 8 des eingehängten Vertikalgliedes 2b (vgl. Fig. 6 und 7), die eine ebenfalls zylindrische, komplementäre Formgebung aufweist, über die volle seitlich vergrößerte Breite c hinweg gleitend abstützen kann.

Da es sich bei den Anlageflächen 7 an den Seitenschenkeln 5 und 6 der Horizontalglieder 2a um zylindrische Flächen handelt, die nur in der Ebene der Bilddarstellung der Fig. 5 gekrümmt verlaufen, senkrecht hierzu jedoch keine Krümmung aufweisen, bedeutet dies somit, daß für die Gesamtbreite c dieser zylindrischen Anlageflächen 7 eine wirksame Lagerbreite in der Größe von

$$c = a + 2b$$

zur Verfügung steht, wobei a den Abstand der seitlichen Begrenzungsflächen 9 und 10 des Horizontalgliedes 2a voneinander, b den seitlichen Überstand, über den auf jeder Seite die Anlageflächen 7 über die seitlichen Begrenzungsflächen 9 bzw. 10 des Endsteges 5 bzw. 6 (und damit auch der Seitenstege 9 und 10) übersteht, und c die gesamte wirksame Lagerbreite senkrecht zur Aufspannebene des Horizontalgliedes 2a, bezeichnen.

Es sei nunmehr Bezug genommen auf die Figuren 6 bis 9, in denen in vergrößerter Darstellung ein Vertikalglied 2b illustriert ist:

Auch dieses Vertikalglied umfaßt zwei Seitenschenkel 3, 4, die an ihren Enden jeweils über einen halbkreisförmig gekrümmten Endsteg 5 bzw. 6 miteinander verbunden sind.

Die Endstege 5 und 6 weisen dabei auf ihrer der Innenöffnung des Vertikalgliedes 2b zugewandten Innenseite eine Abstützfläche 8 auf, die, wie Fig. 6 sehr gut zeigt, ebenfalls zylindrisch ausgebildet ist. Dabei ist diese Abstützfläche 8, wie aus den Fig. 6, 8 und 9 hervorgeht, über die seitlichen Begrenzungsflächen 9, 10 der Endstege 5, 6, die wiederum mit den seitlichen Begrenzungsflächen der Längsschenkel 3 und 4 auf jeder Seite des Kettengliedes 2b in einer gemeinsamen Ebene liegen, mittels nach außen gerichteter Wulste 16 um einen Überstand f (vgl. Fig. 8 und 9) verbreitert. Damit wird wieder eine deutliche Vergrößerung der wirksamen Lagerbreite d der Abstützfläche 8 in Richtung der Mittelachse der zylindrischen Form erreicht:

$$d = e + 2f,$$

worin e den Abstand der seitlichen Begrenzungsflächen 9 und 10 des Vertikalgliedes 2b bezeichnet (vgl. Fig. 5).

Die Vertikalglieder 2b werden jedoch nicht im geschlossenen Zustand, sondern in einem geöffneten Zustand mit den Horizontalgliedern 2a zusammengesetzt, und zwar derart, daß jeweils in ein geschlossenes Horizontalglied 2a zwei hälftige Vertikalglieder 2c an dessen beiden Endstegen 5 bzw. 6 eingehakt werden.

Eine Draufsicht auf ein solches Profilkettenhalbglied 2c zeigt Fig. 7, wobei die Fig. 8 und 9 Schnittdarstellungen dieses Halbgliedes entsprechend den Schnittlinien *F-F* (Fig. 8) und G-G (Fig. 9) darstellen.

Jedes Profilketten-Halbglied 2c wird also zur Montage in ein (geschlossenes) Horizontalglied 2a (entsprechend den Fig. 2 bis 5) eingehängt, und zwar in einer um 90° zu diesem um seine Längsmittelachse verdrehten Aufspannebene, so daß die Abstützfläche 8 des Vertikalgliedes 2b gegen die Anlagefläche 7 des Horizontalgliedes 2a an dem betreffenden Endschenkel 5 bzw. 6 zur gleitenden Anlage kommt. Der Radius r der Anlageflächen 7 ist komplementär zu dem Radius **R** gewählt, so daß beide Radien r, R in eine gute, sich drehbeweglich aufeinander abstützende Anlage im Sinne eines Drehgelenkes gelangen können.

Die seitlichen Überstände f bei den Abstützflächen 8 des Vertikalgliedes 2b sowie die Gesamtbreite **d** der Abstützflächen 8 und auch der Abstand **e** zwischen den seitlichen Begrenzungsflächen 9 und 10 sind bei dem Vertikalglied 2b so gewählt, daß ein unbehindertes Ineinandergreifen von Vertikalgliedern (2b) und Horizontalgliedern (2a) erreicht wird.

Wie Fig. 6 zeigt, sind die seitlich die Abstützflächen 8 verbreiternden und über die seitlichen Begrenzungsflächen 9 bzw. 10 überstehenden Wulste 16 im wesentlichen entlang des gesamten gekrümmten Verlaufes der Endstege 5 bzw. 6 ausgebildet.

Diese seitlichen Überstände **b** und **f** von Anlageflächen 7 bzw. Abstützflächen 8 über die seitlichen Begrenzungsflächen 9, 10 der Endstege 5, 6 hinaus sorgen damit für eine deutliche Vergrößerung der wirksamen Lagerfläche gegenüber dem Fall reiner Rundstahlglieder, wobei die Ausgestaltung dieser Lagerflächen 7 und 8 bei den Horizontalgliedern 2a und den Vertikalgliedern 2b in Form aufeinander gleitender und sich gegeneinander abstützender zylindrischer Flächen 7 bzw. 8 nicht nur ein erheblich größeres Verschleißvolumen als bei Rundstahl-Kettengliedern schafft, sondern überdies auch die sich bei zylindrischen Reibflächen ergebenden Reibverhältnisse mit einer über die Breite der Reibfläche völlig gleichmäßigen örtlichen Geschwindigkeitsverteilung zu besonders günstigen Reibbedingungen führt. Die Vergrößerung der wirksamen Lagerfläche gegenüber Kettengliedern mit reinem Kreisquerschnitten ergibt außerdem bei Anliegen einer bestimmten Zuglast eine verringerte Flächenpressung innerhalb dieses Gelenklagers, verglichen zum Fall einer reinen Rundstahlkette, was ebenfalls günstig im Hinblick auf die Verschleißeigenschaften eines solchermaßen ausgebildeten Gelenkes ist.

**Patentansprüche**

1. Kette (1) mit aus ovalen Profilkettengliedern bestehenden Horizontalgliedern (2a) und in diese eingehängten Vertikalgliedern (2b), bei der jeder die beiden Längsschenkel (3, 4) eines Vertikalgliedes (2b) an einer Endseite desselben miteinander verbindende Endsteg (5, 6) mit einer auf seiner Innenseite ausgebildeten Abstützfläche (8) sich auf einer an der Innenseite des zugeordneten Endsteges (5, 6) eines eingehängten benachbarten Horizontalgliedes (2a) angebrachten Anlagefläche (7) abstützt, wobei die Abstützflächen (8) und die Anlageflächen (7) aller Endstege (5, 6) jeweils seitlich über die beiden seitlichen Begrenzungsflächen (9, 10) des betreffenden Endsteges (5, 6) hinaus verbreitert sind, **dadurch gekennzeichnet, daß** die einander zugeordneten Abstütz- (8) und Anlageflächen (7) jeweils als zueinander komplementäre Zylinderflächen ausgebildet sind.

2. Kette nach Anspruch 1, **dadurch gekennzeichnet, daß** die eingesetzten Profilkettenglieder (2a, 2b) durch Schmieden herstellt sind.

3. Kette nach Anspruch 1, **dadurch gekennzeichnet, daß** die eingesetzten Profilkettenglieder (2a, 2b) durch Gießen hergestellt sind.

4. Kette nach Anspruch 1, **dadurch gekennzeichnet, daß** die eingesetzten Profilkettenglieder (2a, 2b) durch Sintern hergestellt sind.

5. Kette nach einem der Ansprüche 1 bis 4, **dadurch gekennzeichnet, daß** bei den Vertikalgliedern (2b) die Verbreiterung deren Abstützfläche (8) im wesentlichen entlang des gesamten gekrümmten Verlaufes des betreffenden Endsteges (5, 6) vorgesehen ist.

6. Kette nach Anspruch 5, **dadurch gekennzeichnet, daß** bei den als Horizontalgliedern dienenden Profilkettengliedern (2a) deren Anlageflächen (7) den jeweiligen Endsteg (5, 6) an seiner Innenseite und seinen seitlichen Begrenzungsflächen (9, 10) bis zu einer das betreffende Profilkettenglied (2a) an seiner Außenseite begrenzenden Umfangsfläche (15) hinauf umlaufen.

7. Kette nach einem der Ansprüche 1 bis 6, **dadurch gekennzeichnet, daß** die Vertikalglieder (2b) aus miteinander durch Schweißen verbundenen Profilketten-Halbgliedern (2c) bestehen.

8. Verfahren zur Herstellung von Ketten (1) mit aus ovalen Profilkettengliedern bestehenden Horizontalgliedern (2a) und in diese eingehängten Vertikalgliedern (2b), gemäß einem der Ansprüche 1 bis 7, bei dem geschlossene Profilkettenglieder (2a) in offene Profilkettenglieder (2c) eingehängt und anschließend letztere durch Verschweißen geschlossen werden, wobei sich im fertigen Zustand der Kette (1) jeder die beiden Längsschenkel (3, 4) eines Vertikalgliedes (2b) an einer Endseite desselben miteinander verbindende Endsteg (5, 6) mit einer auf seiner Innenseite ausgebildeten Abstützfläche (8) auf einer an der Innenseite des zugeordneten Endsteges (5) eines eingehängten benachbarten Horizontalgliedes (2c) angebrachten Anlagefläche (7) abstützt, **dadurch gekennzeichnet, daß** als offene Profilkettenglieder Profilketten-Halbglieder (2c) eingesetzt werden, die als im Bereich der Mitte der Längsschenkel (3, 4) eines Kettengliedes (2b) senkrecht zur Aufspannebene desselben abgetrennte Halbglieder (2c) ausgeführt sind, und daß die Abstützflächen (8) und die Anlageflächen (7) aller Endstege (5, 6) jeweils seitlich über die Seitenflächen (9, 10) des betreffenden Endsteges (5, 6) hinaus verbreitert und einander zugeordnete Abstütz- (8) und Anlageflächen (7) jeweils als zueinander komplementäre Zylinderflächen ausgebildet sind.

9. Verfahren nach Anspruch 8, **dadurch gekennzeichnet, daß** jeweils zwei Profilketten-Halbglieder (2c), deren jedes in ein geschlossenes Profilkettenglied (2a) um einen Endsteg (5, 6) desselben herum eingehängt ist, zur Schaffung geschlossener Profilkettenglieder an den Stirnflächen (11, 12) ihrer Längsschenkel (3, 4) durch Verschweißen miteinander verbunden werden.

10. Verfahren nach Anspruch 9, **dadurch gekennzeichnet, daß** die Verbindung jeweils zweier Profilketten-Halbglieder (2c) zur Schaffung eines geschlossenen Profilkettengliedes (2b) durch Reibschweißen erfolgt.

**11.** Verfahren nach Anspruch 10, **dadurch gekennzeichnet, daß** für das Reibschweißen ein Linearreibschweißverfahren eingesetzt wird.

**12.** Verfahren nach Anspruch 10 oder 11, **dadurch gekennzeichnet, daß** die eingesetzten Profilkettenglieder (2a, 2b) aus Kunststoff hergestellt sind.

**13.** Verfahren nach einem der Ansprüche 8 bis 12, **dadurch gekennzeichnet, daß** als offene Profilkettenglieder Halbglieder (2c) von Vertikalgliedern (2b) eingesetzt werden.

**Claims**

**1.** Chain (1) having horizontal links (2a) consisting of oval profile chain links and vertical links (2b) which are hooked into the former, in which chain each end web (5, 6) which connects the two longitudinal limbs (3, 4) of a vertical link (2b) to one another on an end side of the latter is supported by way of a supporting surface (8), which is formed on its inner side, on a bearing surface (7) which is attached on an inner side of the associated end web (5, 6) of a hooked-in adjacent horizontal link (2a), wherein the supporting surfaces (8) and the bearing surfaces (7) of all the end webs (5, 6) are widened laterally in each case beyond the two lateral boundary surfaces (9, 10) of the relevant end web (5, 6), **characterised in that** the supporting surfaces (8) and bearing surfaces (7) which are assigned to one another are configured in each case as mutually complementary cylindrical surfaces.

**2.** Chain according to claim 1, **characterised in that** the profile chain links (2a, 2b) used are manufactured by forging.

**3.** Chain according to claim 1, **characterised in that** the profile chain links (2a, 2b) used are manufactured by casting.

**4.** Chain according to claim 1, **characterised in that** the profile chain links (2a, 2b) used are manufactured by sintering.

**5.** Chain according to one of claims 1 to 4, **characterised in that** in the vertical links (2b) the widening of their supporting surface (8) is provided substantially along the entire curved course of the relevant end web (5, 6).

**6.** Chain according to claim 5, **characterised in that** in the profile chain links (2a) serving as horizontal links whose bearing surfaces (7) run up around the relevant end web (5, 6) on its inner side and its lateral boundary surfaces (9, 10) up to a circumferential surface (15) limiting the profile chain link (2a) in question on its outer side.

**7.** Chain according to one of claims 1 to 6, **characterised in that** the vertical links (2b) consist of profile chain half links (2c) joined together by welding.

**8.** Method for manufacturing chains (1) having horizontal links (2a) consisting of oval profile chain links and vertical links (2b) which are hooked into the former, according to one of claims 1 to 7, in which closed profile chain links (2a) are hooked into open profile chain links (2c) and then the latter are closed by welding, wherein in the finished state of the chain (1) each end web (5, 6) which connects the two longitudinal limbs (3, 4) of a vertical link (2b) to one another on an end side of the latter is supported by way of supporting surface (8), which is formed on its inner side, on a bearing surface (7) which is attached on an inner side of the associated end web (5) of a hooked-in adjacent horizontal link (2c), **characterised in that** profile chain half links (2c) are used as open profile chain links which are configured as half links (2c) separated in the region of the middle of the longitudinal limbs (3, 4) of a chain link (2b) perpendicular to the clamping plane of the latter and that the supporting surfaces (8) and the bearing surfaces (7) of all the end webs (5, 6) are widened laterally in each case beyond the two lateral surfaces (9, 10) of the relevant end web (5, 6), and supporting surfaces (8) and bearing surfaces (7) which are assigned to one another are configured in each case as mutually complementary cylindrical surfaces.

**9.** Method according to claim 8, **characterised in that** two profile chain half links (2c) in each case, each one of which is hooked into a closed profile chain link (2a) around an end web (5, 6) of the latter to create closed profile chain links on the end faces (11, 12) of their longitudinal limbs (3, 4), are connected to one another by welding.

**10.** Method according to claim 9, **characterised in that** the joint between each two profile chain half links (2c) to create a closed profile chain link (2b) is made by friction welding.

**11.** Method according to claim 10, **characterised in that** a linear friction welding process is used for the friction welding.

**12.** Method according to claim 10 or 11, **characterised in that** the profile chain links (2a, 2b) used are manufactured from plastic.

**13.** Method according to one of claims 8 to 12, **characterised in that** half links (2c) of vertical links (2b) are used as open profile chain links.

**Revendications**

**1.** Chaîne (1) ayant des maillons horizontaux (2a) composés de maillons de chaîne profilés ovales et des maillons verticaux (2b) accrochés dans les maillons horizontaux, dans laquelle chaque élément de liaison d'extrémité (5, 6) raccordant l'une à l'autre les deux branches longitudinales (3, 4) d'un maillon vertical (2b) sur un côté d'extrémité de celui-ci s'appuie, par une surface de support (8) constituée sur son côté intérieur, sur une surface d'appui (7) placée sur le côté intérieur de l'élément de liaison d'extrémité (5, 6) affecté d'un maillon horizontal (2a) voisin accroché, les surfaces de support (8) et les surfaces d'appui (7) de tous les éléments de liaison d'extrémité (5, 6) étant respectivement élargies latéralement au-delà des deux surfaces de limitation (9, 10) latérales de l'élément de liaison d'extrémité (5, 6) concerné, **caractérisée en ce que** les surfaces de support (8) et surfaces d'appui (7) affectées les unes aux autres sont constituées respectivement en tant que surfaces cylindriques complémentaires entre elles.

**2.** Chaîne selon la revendication 1, caractérisée ne ce que les maillons de chaîne profilés (2a, 2b) utilisés sont fabriqués par forgeage.

**3.** Chaîne selon la revendication 1, **caractérisée en ce que** les maillons de chaîne profilés (2a, 2b) utilisés sont fabriqués par moulage.

**4.** Chaîne selon la revendication 1, **caractérisée en ce que** les maillons de chaîne profilés (2a, 2b) utilisés sont fabriqués par frittage.

**5.** Chaîne selon l'une des revendications 1 à 4, **caractérisée en ce que**, pour les maillons verticaux (2b), l'élargissement de leur surface de support (8) est prévu essentiellement le long du tracé courbé total de l'élément de liaison d'extrémité (5, 6) concerné.

**6.** Chaîne selon la revendication 5, **caractérisée en ce que**, pour les maillons de chaîne profilés (2a) servant de maillons horizontaux, leur surface d'appui (7) entourent l'élément de liaison d'extrémité (5, 6) respectif sur son côté intérieur et ses surfaces de limitation (9, 10) latérales jusqu'à une surface périphérique (15) limitant le maillon de chaîne profilé (2a) concerné sur son côté extérieur.

**7.** Chaîne selon l'une des revendications 1 à 6, **caractérisée en ce que** les maillons verticaux (2b) se composent de demi-maillons de chaîne profilés (2c) raccordés entre eux par soudage.

**8.** Procédé de fabrication de chaînes (1) ayant des maillons horizontaux (2a) composés de maillons de chaîne profilés ovales et des maillons verticaux (2b) accrochés dans les maillons horizontaux selon l'une des revendications 1 à 7, dans lequel des maillons de chaîne profilés (2a) fermés sont accrochés dans des maillons de chaîne profilés (2c) ouverts et puis ces derniers sont fermés par soudage, chaque élément de liaison d'extrémité (5, 6) raccordant l'une à l'autre les deux branches longitudinales (3, 4) d'un maillon vertical (2b) sur un côté d'extrémité de celui-ci s'appuyant, dans l'état fini de la chaîne (1), par une surface de support (8) constituée sur son côté intérieur, sur une surface d'appui (7) placée sur le côté intérieur de l'élément de liaison d'extrémité (5, 6) affecté d'un maillon horizontal (2a) voisin accroché, **caractérisée en ce que**, en tant que maillons de chaîne profilés ouverts, il est utilisé des demi-maillons de chaîne profilés (2c) qui sont réalisés en tant que demi-maillons (2c) séparés dans la zone du milieu des branches longitudinales (3, 4) d'un maillon de chaîne (2b) perpendiculairement au plan de serrage de celui-ci, et **en ce que** les surfaces de support (8) et les surfaces d'appui (7) de tous les éléments de liaison d'extrémité (5, 6) sont élargies respectivement latéralement au-delà des surfaces latérales (9, 10) de l'élément de liaison d'extrémité (5, 6) concerné, et des surfaces de support (8) et des surfaces d'appui (7) affectées les unes aux autres sont respectivement constitués en tant que surfaces de cylindre complémentaires entre elles.

**9.** Procédé selon la revendication 8, **caractérisé en ce que** respectivement deux demi-maillons de chaîne profilés (2c), dont chacun est accroché dans un maillon de chaîne profilé (2a) fermé tout autour d'un élément de liaison d'extrémité (5, 6) de celui-ci, sont raccordés l'un à l'autre par soudage pour la création de maillons de chaîne profilés fermés sur les faces frontales (11, 12) de leurs deux branches longitudinales (3, 4).

**10.** Procédé selon la revendication 9, **caractérisé en ce que** le raccordement de respectivement deux demi-maillons de chaîne profilés (2c) pour la création d'un maillon de chaîne profilé (2b) fermé s'effectue par soudage par friction.

**11.** Procédé selon la revendication 10, **caractérisé en ce que**, pour le soudage par friction, il est utilisé un procédé de soudage par friction linéaire.

**12.** Procédé selon la revendication 10 ou 11, **caractérisé en ce que** les maillons de chaîne profilés (2a, 2b) utilisés sont fabriqués en matière plastique.

**13.** Procédé selon l'une des revendications 8 à 12, **caractérisé en ce que** des demi-maillons (2c) de maillons verticaux (2b) sont utilisés en tant que maillons de chaîne profilés ouverts.

**Fig. 1**

**Fig. 2**

**Fig. 3**

**Fig. 4**

**Fig. 5**

EP 2 683 964 B1

*Fig. 6*

*Fig. 7*

*Fig. 8*

*Fig. 9*

11

**EP 2 683 964 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060053766 A1
- DE 2007061512 A1
- DE 102008034360 A1
- US 5956936 A
- DE 19806719
- DE 202005010844 U
- WO 2009080289 A
- DE 102007061512 A1
- DE 3212360 C1